# EUROPÄISCHE PATENTANMELDUNG

(11) **EP 3 945 660 A1**
(43) Veröffentlichungstag der Anmeldung: **02.02.2022**
(21) Anmeldenummer: 20188126.5
(22) Anmeldetag: 28.07.2020
(51) Int. Cl.: H02K 3/487, H02K 15/12

(54) **DECKSCHIEBER EINES STATORS EINER DYNAMOELEKTRISCHEN MASCHINE**

(71) Anmelder: Siemens Aktiengesellschaft, 80333 München (DE)
(72) Erfinder: Katzenberger, Tobias, 97631 Bad Königshofen STT Untereßfeld (DE); Plochmann, Bastian, 91413 Neustadt an der Aisch (DE)

(57) **Zusammenfassung**

Die Erfindung betrifft einen Deckschieber (9) einer dynamoelektrischen Maschine (1), mit einer ersten Lage (7) und einer zweiten Lage (8), die voneinander zumindest abschnittsweise beabstandet sind, so dass sich dazwischen ein Fließkanal (13) ausbildet.

## Beschreibung

Die Erfindung betrifft einen Deckschieber, einen Stator, eine dynamoelektrische Maschine und ein Verfahren zur Imprägnierung eines Stators einer dynamoelektrischen Maschine.

Dynamoelektrische Maschinen weisen in ihren Nuten ein Wicklungssystem auf, das bei Bestromung ein Magnetfeld erzeugt und aufgrund elektromagnetischer Wechselwirkung mit dazu korrespondierenden Maschinenteilen eine Bewegung herbeiführt.

Das Wicklungssystem in den Nuten und/oder den Wickelköpfen wird mit Isolierharz gefüllt bzw. versehen und anschließend ausgehärtet. Diese Tränkung dient dem Füllen von Hohlräumen im Dielektrikum und in den Strömungswegen der Wärme. Damit werden Glimmentladungen vermieden und der Wärmewiderstand reduziert. Außerdem dient die Tränkung der mechanischen Verfestigung.

In der Herstellung eines Niederspannungs-Elektromotors (Industriemotoren oder E-Mobility-Motoren bis 1 kV) ist die Imprägnierung mit flüssigem Reaktivharz und die anschließende Härtung desgleichen ein sehr zeit- und kostenaufwendiger Prozess im Vergleich zu den übrigen Fertigungsschritten, wie Wickeln, Einziehen, Phasentrennen. Es handelt sich oftmals um große Tauchimprägnierstationen. Der Imprägnierprozess an sich ist ein integraler Prozess, wobei viele Achshöhen und Größen ein Tauch- und/oder Temperaturprofil durchlaufen. Dadurch ist es nahezu unmöglich, eine individuelle Optimierung der Imprägnierparameter auf eine Motorart zu erhalten.

Bekannt ist das sogenannte Träufelverfahren als eine Imprägniermethode für sehr definierte Imprägnierprozesse, wobei durch hochgenaue Dosieranlagen das Flüssigharz auf den rollierenden Stator aufgebracht wird. Eine Vorwärmung des Stators erzeugt eine Viskositätsverringerung des Harzes, womit der einsetzende Kapillareffekt begünstigt wird und sich die Statornut sukzessive mit Harz füllt.

Bei der Applikation des Harzes auf den rollierenden Stator gibt es mehrere Parameter, welche beachtet werden müssen, um einen optimalen und vor allem ausreichenden Harzfluss in die Nuten zu gewährleisten, also dass das Imprägniermedium auch bei axial längeren Blechpaketen bis zum axialen Nutmittelpunkt fließt und erst dort geliert. Dies ist insbesondere bei der Nutzung von zwei komponentigen Flüssigharzen, welche eine relativ schnelle Gelierzeit besitzen, im Fokus, da hierdurch selbst bei niedrigen Temperaturen innerhalb von kurzer Zeit ein Viskositätsgrenzwert überschritten wird und somit die Fließfähigkeit der Substanz deutlich verringert ist. Dieser Effekt ist andererseits erwünscht, um kurzfristig einen tropffreien Stator zu erhalten, stellt somit jedoch an die Fließfähigkeit des Harzes und die Aufnahmefähigkeit des Stators besondere Anforderungen.

Aufgrund der hohen Varianz der Niederspannungsmotoren (verschiedene Achshöhen, Achslängen, Wicklungsarten, Drahtdurchmesser ...) trifft der Träufelstrahl einer Träufelanlage auf unterschiedlichste Substrate, welche alle diese mindeste Aufnahmefähigkeit gewährleisten müssen, um letztendlich eine ausreichende Betriebssicherheit der dynamoelektrischen Maschinen zu gewährleisten.

Insbesondere verschiedene Arten und Mengen von Flächenisolierstoffen (z.B. Phasentrenner) können innerhalb der Nut Barrieren darstellen, welche das Harz am optimalen Einfließen in die Wicklung hindern. Diese Flächenisolierstoffe (z.B. Nomex Papiere, Multilaminate aus PET-Folie und Aramidgewebe) sind flächige Ebenen, welche vom Harz nicht durchdrungen werden können, sondern das Harz zum Umfließen zwingen. Dieser Effekt verlangsamt ebenfalls das Eindringen in die Nut und verhindert gegebenenfalls sogar somit die komplette Nutfüllung.

Mangelhaftes Einfließverhalten in die Nut lässt sich herkömmlich durch Anpassung des Harzes reduzieren. Hierbei kann die Harzchemie derart angepasst werden, dass es sich um ein flüssigeres Material handelt, welches gegebenenfalls zusätzlich einen verzögerten Gelierpunkt aufweist, so dass das Material zum einen schneller um Fließbarrieren sowie lange Nutstäbe fließen kann.

Eine Reduktion der Viskosität ist aber oftmals aus chemischer, technischer Sicht nicht mehr herstellbar, bzw. im Rahmen der gesundheitlichen Vorschriften nicht mehr wünschenswert oder gar erlaubt, da niedrigere Viskositäten oftmals mit geringeren molekularen Kettenlängen und/oder Reaktivverdünnern realisiert werden.

In beiden Bereichen sind mittlerweile moderne Reaktivharze am gesundheitspolitischen Grenzwert angelangt. Ein verzögerter Gelierpunkt ist im Grunde genommen technisch möglich, jedoch aus wirtschaftlicher Sicht kontraproduktiv, da hierdurch die Taktzeiten verlängert werden und/oder die Energiekosten für die Härtung des Harzes ansteigen.

Eine Optimierung der Flächenisolierstoffe ist prinzipiell ebenfalls möglich, jedoch nur wirksam für eine bessere Aufnahme des Harzes am Wickelkopf bzw. am Nutaustritt. Lange Nuten und somit lange Fließwege können hierbei nicht effizient optimiert werden.

Ausgehend davon liegt der Erfindung die Aufgabe zugrunde, die Imprägnierung unter den oben genannten Parameter zu verbessern und einen Stator und eine dynamoelektrische Maschine mit zuverlässiger Imprägnierung bereitzustellen.

Die Lösung der gestellten Aufgabe gelingt durch einen Deckschieber einer dynamoelektrischen Maschine, mit einer ersten Lage und einer zweiten Lage, die voneinander zumindest abschnittsweise beabstandet sind, so dass sich dazwischen ein Kanal ausbildet.

Die Lösung der gestellten Aufgabe gelingt auch durch einen Stator mit einem hohlzylindrischen, magnetisch leitfähigen Körper, der auf seiner inneren oder äußeren Mantelfläche im Wesentlichen axial verlaufende, teilgeöffnete Nuten aufweist, in den ein Wicklungssystem angeordnet ist, die von einem erfindungsgemäßen Deckschieber verschlossen sind.

Die Lösung der gestellten Aufgabe gelingt auch durch dynamoelektrische Maschine mit einem Stator, der einen erfindungsgemäßen Deckschieber aufweist.

Die Lösung der gestellten Aufgabe gelingt auch durch ein Verfahren zur Herstellung/Imprägnierung eines Stators mit einem hohlzylindrischen magnetisch leitfähigen Körper, der auf seiner inneren oder äußeren Mantelfläche im Wesentlichen axial verlaufende teilgeöffnete Nuten aufweist, in den ein Wicklungssystem angeordnet ist, durch folgende Schritte:
- Einsetzen eines zumindest abschnittsweise axial doppellagigen Deckschiebers in den Nutschlitz, um den Nutinnenraum abzuschließen, derart, dass er sich mit einer Nutisolierung überlappt,
- Einfließendes Harz über die Stirnseiten der Nuten und über die Fließkanäle des Deckschiebers in den axialen Innenraum der Nuten.

Erfindungsgemäß wird nunmehr ein Deckschieber doppellagig ausgeführt. Mit anderen Worten, der Deckschieber weist zwei voneinander beabstandete Lagen auf, die einen Fließkanal bilden, so dass das Harz ohne Barrieren bis zu seinem jeweiligen Bestimmungsort in der Nut gelangt.

Als Deckschieber wird dabei ein Flächenisolierstoff betrachtet, der insbesondere bei Träufelwicklungen als Streifen ausgebildet ist und die Wicklung in den Nuten positioniert.

Beim Einziehen der Wicklung in das Blechpaket werden ebenfalls Flächenisolierstoffe mit in die Nuten eingebracht. Als Nutauskleidung dient hierbei ein sogenannte Nutkasten. Dabei handelt es sich um einen gefalzten Flächenisolierstoff, welcher mit seiner Querschnittsform idealerweise an die Kontur der Nut angepasst ist und an der Nutwandung anliegt. Die Nutauskleidung bildet dabei eine zusätzliche flächige elektrische Barriere zwischen dem Wicklungssystem, insbesondere der Kupferwicklung als Lackdraht ausgeführt, und dem einem magnetisch leitfähigen Körper, wie beispielsweise einem Blechpaket.

Nach dem Einzug der Wicklung wird der Nutschlitz mit einem erfindungsgemäßen Deckschieber verschlossen, welcher ebenfalls aus einem gefalzten Flächenisolierstoff besteht und bislang zwei wichtige Funktionen aufweist. Zum einen realisiert man hiermit die notwendigen Luft- und Kriechstrecken, da sich Deckschieber und Nutkasten an den Rändern überlappen. Zum anderen verkeilt sich der Nutkasten mit dem Nutzahn und fixiert somit mechanisch die Wicklung in der Nut, so dass keine Einzeldrähte durch den Nutschlitz zurück in den Bereich des Luftspaltes oder des Rotors rutschen können. Zusammen mit dem Nutkasten bildet der Deckschieber einen Hauptkanal, welcher beim Imprägnierprozess mit Reaktivharz gefüllt wird und die Kupferwicklung beinhaltet.

Über den erfindungsgemäßen Deckschieber, der zumindest axial betrachtet doppellagig ausgeführt ist, wird pro Nut zusätzlich ein oder mehrere effiziente Fließkanäle für einfließende Harze gebildet, welches dem flüssigen Medium erlaubt, ohne kapillarverhindernde bzw. flussverhindernde Isolierstoffe, Drahtkreuzungen oder lange und zugleich sehr dünne Fließwege bis in die Mitte der Nut zu fließen und sich dort zu verteilen.

In einer vorteilhaften Ausgestaltung werden die Fließröhren durch eine Riffelung einer Lage gebildet, und/oder es liegen bei einer Lage - der dem Wicklungssystem zugewandten Lage - Perforierungen vor, die eine vorgebare Verteilung des Harzes innerhalb der axialen Länge der Nut gewährleisten oder zumindest unterstützen.

Hierbei wird durch eine Doppellage des Deckschieber eine Art Fließkanal erzeugt, welche jeweils am axialen Nutaustritt seine Öffnungen besitzt. Die innere Lage des Deckschiebers kann hierbei perforiert sein, d.h. mit Austrittslöchern versehen oder zweigeteilt sein, mit einem nicht bündigen Stoß in der Mitte des Bleches. Der Deckschieber an sich könnte einseitig in Längsrichtung bzw. Axialrichtung "geriffelt" sein, so dass eine möglichst definierte Fließröhre, insbesondere hin zur Nutmitte entsteht.

Eine weiter axial nach außen ragende zweite Lage des Deckschiebers gegebenenfalls mit einer leichten Falzung ermöglicht einen verbesserten Aufnahmeeffekt des Harzes beim Träufeln auf den Innenradius des Nutaustrittes. Somit ist nochmals ein verbessertes Einfließen in den "Fließkanal" gewährleistet.

Das Einbringen des Deckschiebers bei langen Blechpaketen ist typischerweise ein händischer Fertigungsprozess. Somit stellt eine Einbringung des doppellagigen Deckschiebers keinen nennenswerten zeitlichen Mehraufwand in der Fertigung dar und kann somit kosteneffizient realisiert werden.

Aber auch die Integration des Doppel-Deckschiebers im automatisierten Einziehprozess ist technisch denkbar. Falzung, Perforierung und Riffelung von Flächenisolierstoffen sind bei Meterware kostengünstig zu realisieren.

Es könnte sowohl die innere als auch die äußere Lage geriffelt verwendet werden, um u.a. logistische Synergien für die Handarbeitsplätze zu nutzen. Damit wäre ausschließlich ein Material als Meterware notwendig.

Die Riffelung beeinflusst das Fließverhalten der Harze nur in geringem Maße, ist aber positiv hinsichtlich der mechanischen Verfestigung der Kupferdrähte und kann zumindest an den innersten Wicklungslagen Drahtkreuzungen verhindern.

Bei einer Tränkung wird das Wicklungssystem in den Nuten und/oder den Wickelköpfen mit Isolierharz gefüllt bzw. versehen und anschließend ausgehärtet. Die Tränkung dient dem Füllen von Hohlräumen im Dielektrikum und in den Strömungswegen der Wärme. Damit werden Glimmentladungen vermieden und der Wärmewiderstand reduziert. Außerdem dient die Tränkung der mechanischen Verfestigung.

Durch den erfindungsgemäßen Deckschieber werden die Tränkungszeiten des Stators reduziert und auch eine qualitativ hochwertige Tränkung des Stators und damit einer dynamoelektrischen Maschine geschaffen, die einen zuverlässigen Betrieb der dynamoelektrischen Maschine gewährleisten kann.

Die Erfindung sowie weitere vorteilhafte Ausgestaltungen der Erfindung werden in den nachfolgenden prinzipiell dargestellten Zeichnungen näher erläutert. Darin zeigen:
- FIG 1: einen Längsschnitt einer prinzipiell dargestellten elektrischen Maschine,
- FIG2: einen Querschnitt einer Nut,
- FIG 3: einen Längsschnitt einer Nut während des Einfüllens des Harzes,
- FIG 4 und 5: Querschnitte unterschiedlicher Deckschieber.

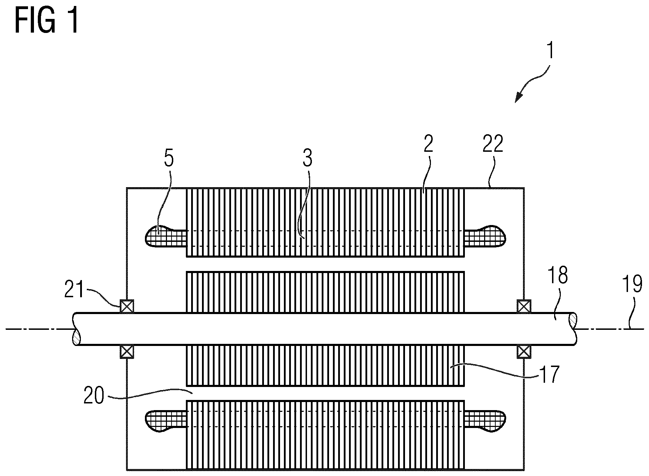

FIG 1 zeigt in einem Längsschnitt eine prinzipiell dargestellte dynamoelektrische Maschine 1, mit einem Stator 2, der axial verlaufende Nuten 3 aufweist, in denen ein Wicklungssystem 5 angeordnet ist. Über einen Luftspalt 20 hinweg tritt der bestromte Stator 2 in magnetische Wechselwirkung mit einem Rotor 17, der eine Drehung der Welle 18 um eine Achse 19 bewirkt. Die dynamoelektrische Maschine 1 ist von einem Gehäuse 22 umgeben, das sich über Lager 21 an der Welle 18 abstützt.

Beim Einziehen des Wicklungssystems 5 in die Nuten 3 eines Blechpakets des Stators 2 werden ebenfalls Flächenisolierstoffe mit in die Nuten 3 eingebracht. Als Nutauskleidung dient hierbei der sogenannte Nutkasten, wobei es sich dabei um einen gefalzten Flächenisolierstoff handelt, welcher sich mit seiner Querschnittsform idealerweise an die Kontur der Nut angepasst und an der Nutwandung anliegt. Die Nutauskleidung bzw. Nutisolierung 4 bildet dabei eine zusätzliche flächige elektrische Barriere zwischen dem Wicklungssystem 5, insbesondere einer Kupferwicklung als Lackdraht ausgeführt, und einem magnetisch leitfähigen Körper, beispielsweise einem Blechpaket.

In der Herstellung eines derartigen Niederspannungs-Elektromotors, als typische Industriemotoren oder E-Mobility-Motoren bis 1 kV, ist die Imprägnierung des Wicklungssystems 5 mit flüssigem Reaktivharz und die anschließende Härtung desgleichen ein sehr zeit- und kostenaufwendiger Prozess im Vergleich zu den übrigen Fertigungsschritten des Wicklungssystems 5 wie Wickeln, Einziehen, Phasentrennen, etc.

Um einen definierten Imprägnierprozess des Wicklungssystems 5 zu erhalten, wird u.a. das Träufelverfahren eingesetzt, wobei durch hochgenaue Dosieranlagen das Flüssigharz auf den rollierenden Stator 2 aufgebracht wird.

Eine Vorwärmung des Stators 2 erzeugt eine Viskositätsverringerung des Harzes, womit der einsetzende Kapillareffekt begünstigt wird und sich die Nut 3 des Stators 2 sukzessive mit Harz füllt.

Bei der Applikation des Harzes, insbesondere auf einen rollierenden Stator 2, gibt es mehrere Parameter, welche beachtet werden müssen, um einen optimalen und vor allem ausreichenden Harzfluss in die Nuten 3 zu gewährleisten, also dass das Imprägniermedium auch bei axial längeren Blechpaketen bis zum axialen und/oder radialen Mittelpunkt der Nut 3 fließt und dort erst geliert.

Dies ist insbesondere bei der Nutzung von zwei komponentigen Flüssigharzen wichtig, welche eine relativ schnelle Gelierzeit besitzen, da hierdurch selbst bei niedrigen Temperaturen innerhalb von kurzer Zeit ein Viskositätsgrenzwert überschritten wird und somit die Fließfähigkeit der Substanz deutlich verringert ist.

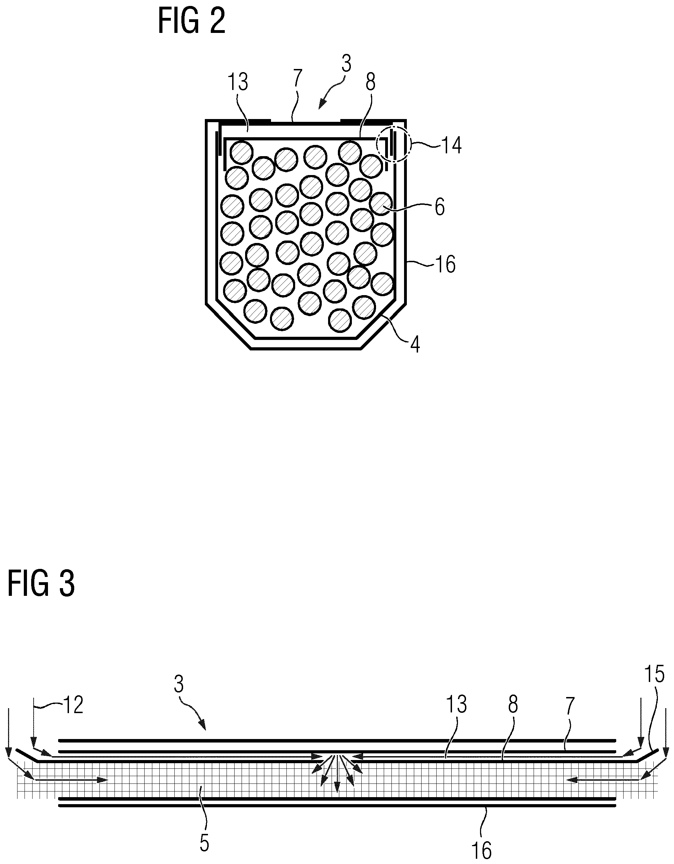

FIG 2 zeigt in einem Querschnitt eine Nut 3 der dynamoelektrischen Maschine 1, die ein Wicklungssystem 5 aufweist, das aus Runddrähten gebildet ist. In der Nut 3 können ebenso andere elektrische Leiter mit anderen Querschnitten eingesetzt sein. Die Innenseite der Nut 3 ist mit einer Nutisolierung 4 versehen. Ein erfindungsgemäßer Deckschieber 9, mit einer ersten Lage 7 und einer zweiten Lage 8 deckt die Nut 3 Richtung Luftspalt 20 ab. Die erste Lage 7 ist direkt am Nutschlitz angeordnet und weist dort zu dem Luftspalt 20 der dynamoelektrischen Maschine 1. Die zweite Lage 8 ist von der ersten Lage 7 radial beabstandet und bildet somit einen axialen Kanal aus. Mit der Nutisolierung 4 bildet sich eine Überlappung aus, derart, dass der Deckschieber 9 zumindest abschnittsweise innerhalb der Nutisolierung 4 angeordnet ist.

FIG 3 zeigt den prinzipiellen Harzfluss 12 bei einem erfindungsgemäßen Deckschieber 9 während des Eingießens. In diesem Fall wird axial von beiden Seiten das Wicklungssystem mit Harz versorgt. Um nunmehr auch vor allem im mittleren Bereich der Nut 3 eine ausreichende Harzmenge im Wicklungssystem 5 zu erhalten, wird Harz auch über die Fließkanäle 13 des Deckschiebers 9 in die "kritischen" Bereiche des Wicklungssystem gebracht. Dies ist insbesondere bei der Nutzung eines 2-komponentigen Flüssigharzes vorteilhaft, welche eine relativ schnelle Gelierzeit besitzen. Selbst bei niedrigen Temperaturen wird der Viskositätsgrenzwert nicht so schnell überschritten und somit wird die Fließreichweite vergrößert.

Dies gelingt beispielsweise dadurch, dass der Deckschieber 9 eine axial durchgängige erste Lage 7, aber eine unterbrochene zweite Lage 8 aufweist. Über diese Lücke der zweiten Lage 8 kann nunmehr Harz vor allem in mittleren Bereich fließen. Die zweiten Lagen 8 stoßen also nicht bündig zusammen.

Der erfindungsgemäße Deckschieber 9 ermöglicht somit eine vergleichsweise bessere oder optimale Füllung insbesondere der Mitte der Nut 3. Ohne diesen Deckschieber 9 müsste das Harz durch zunächst durch das komplette Wicklungssystem 5, insbesondere die komplette Kupferwicklung bis zur Mitte der Nut 3 durchlaufen und darf nicht zu früh gelieren. Geliert das Harz vorzeitig aus, ist die Mitte der Nut 3 nicht mit Harz gefüllt.

Durch den Deckschieber, auch als Resin-Pipe bezeichnet wird nunmehr gezielt in diese Nutmitte das Harz geführt.

Verschiedene Arten und Mengen von Flächenisolierstoffen (z.B. Phasentrenner) stellen Barrieren dar, welche das Harz am optimalen Einfließen in das Wicklungssystem 5 hindern. Diese Flächenisolierstoffe (z.B. Nomex Papiere, Multilaminate aus PET-Folie und Aramidgewebe) sind flächige Ebenen, welche nicht durchdrungen werden können, sondern das Harz zum Umfließen zwingen. Durch den erfindungsgemäßen Deckschieber 9 werden nunmehr die Barrieren "gepypasst".

Der lange Weg des Harzes über das Wicklungssystem 5 und/oder die Flächenisolierstoffe zur Mitte der Nut 3 wird somit "gebypasst".

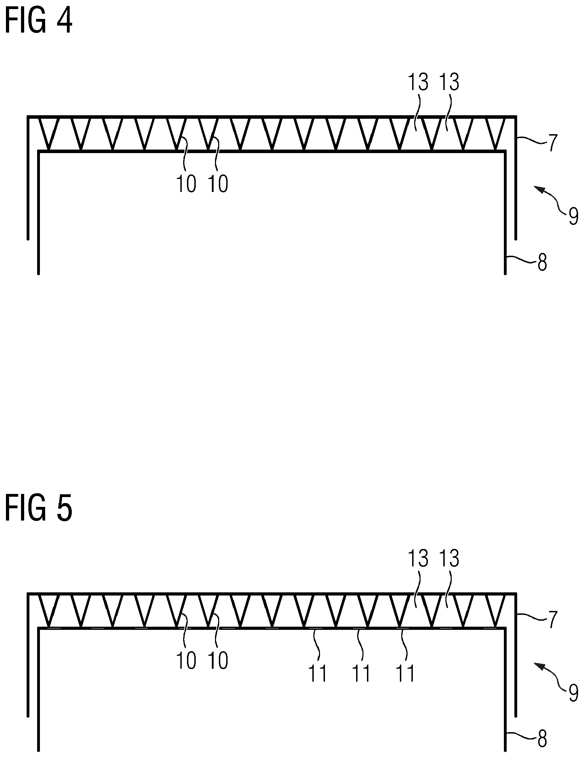

Das zügige Führen des Harzflusses 12 in die Nut 3, in die Mitte der Nut und/oder auch andere Positionen innerhalb des axialen Verlaufes der Nut 3 gelingt auch durch eine Perforierung 11 der zweiten Lage 8 gemäß FIG 5. Diese Perforierung 11 kann über die Fläche der zweiten Lage 8 gleichmäßig verteilt sein, ebenso kann die zweite Lage 8 auch eine unterschiedliche Dichte von Löchern pro Flächeneinheit aufweisen. Dabei ist die Dichte der Löcher in mittleren Bereich der Lage 8 größer. Ebenso kann auch, oder ergänzend, der Durchmesser der Löcher der Perforierung 11 dem gewünschten Harzfluss angepasst werden, so dass die größeren Löcher in der Mitte der Nut 3 angeordnet sind.

FIG 4 und FIG 5 zeigen Riffelungen 10 der ersten Lage 7, die zur zweiten Lage 8 ausgerichtet sind und den Fließkanal 13 in mehrere parallel verlaufende, nicht zwangsläufig gleichgroße, kleinere Kanäle, unterteilen. Insbesondere sind dabei eine gewisse Anzahl der Löcher den jeweils kleineren Kanälen zugordnet.

## Patentansprüche

1. Deckschieber (9) einer dynamoelektrischen Maschine (1), mit einer ersten Lage (7) und einer zweiten Lage (8), die voneinander zumindest abschnittsweise beabstandet sind, so dass sich dazwischen ein Fließkanal (13) ausbildet.

2. Deckschieber (9) nach Anspruch 1, **dadurch ge**- **kennzeichnet**, dass zumindest eine Lage (7,8) eine Riffelung (10), insbesondere axial verlaufende Riffelung (10) aufweist.

3. Deckschieber (9) nach Anspruch 2, **dadurch ge**- **kennzeichnet**, dass die Riffelung (10) der ersten Lage (7) auf die zweite Lage (8) gerichtet ist.

4. Deckschieber (9) nach Anspruch 2, **dadurch ge**- **kennzeichnet**, dass auf die zweite Lage (8) eine Riffelung (10) aufweist, die zur Nut (3) und/oder zur ersten Lage (7) weist.

5. Deckschieber (9) nach Anspruch 1 oder 2, **dadurch gekennzeichnet, dass** die zweite Lage (8) eine Perforierung (11) aufweist.

6. Stator (2) mit einem hohlzylindrischen magnetisch leitfähigen Körper, der auf seiner inneren oder äußeren Mantelfläche im Wesentlichen axial verlaufende teilgeöffnete Nuten (3) aufweist, in denen ein Wicklungssystem (5) angeordnet ist, wobei die Nuten (3) von einem Deckschieber (9) nach einem der Ansprüche 1 bis 5 verschlossen sind.

7. Dynamoelektrische Maschine (1) mit einem Stator (2) nach Anspruch 6.

8. Verfahren zur Herstellung/Imprägnierung eines Stators (2) mit einem hohlzylindrischen magnetisch leitfähigen Körper, der auf seiner inneren oder äußeren Mantelfläche im Wesentlichen axial verlaufende teilgeöffnete Nuten (3) aufweist, in den ein Wicklungssystem (5) angeordnet ist, durch folgende Schritte:
- Einsetzen eines zumindest abschnittsweise axial doppellagigen Deckschiebers (9) in den Nutschlitz, um den Nutinnenraum abzuschließen, derart, dass er sich mit einer Nutisolierung (4) überlappt,
- Einfließendes Harz über die Stirnseiten der Nuten (3) und über die Fließkanäle (13) des Deckschiebers (9) in den axialen Innenraum der Nuten (3).
